# EUROPEAN PATENT SPECIFICATION

(11) **EP 4 035 947 B1**
(45) Date of publication and mention of the grant of the patent: **30.07.2025**
(21) Application number: 22154835.7
(22) Date of filing: 02.02.2022
(51) Int. Cl.: B60R 11/06, B60R 7/04, B60L 53/18

(54) **VEHICLE EQUIPPED WITH A SEAT ASSEMBLY INCLUDING AN IMPROVED VEHICLE STORAGE BOX**
FAHRZEUG MIT EINER SITZBAUGRUPPE UND EINER VERBESSERTEN FAHRZEUG-AUFBEWAHRUNGSBOX
VÉHICULE ÉQUIPÉ D'UN ENSEMBLE DE SIÈGE COMPRENANT UN COFFRE DE RANGEMENTE DE VÉHICULE AMÉLIORÉ

(30) Priority: 02.02.2021 IT 202100002180
(43) Date of publication of application: 03.08.2022
(73) Proprietor: IVECO S.P.A., 10156 Torino (IT)
(72) Inventor: AIMO BOOT, Marco, 10072 CASELLE TORINESE (IT); SANTORO, Francesco, 10136 TORINO (IT)
(74) Representative: Studio Torta S.p.A.

(56) References cited:
- WO-A1-2010/146411
- DE-A1- 102011 006 630
- DE-A1- 102017 124 830
- JP-A- 2012 096 726
- JP-A- 2016 030 122
- JP-B2- 3 070 811
- US-A- 5 816 650
- US-A1- 2020 047 841

## Description

### TECHNICAL FIELD

The present invention relates to a vehicle box, in particular a vehicle comprising a vehicle seat assembly provided with such a vehicle box.

The present invention finds its preferred, although not exclusive, application in the housing of electric cables that can be used for charging the vehicle. This application will be referred to hereinafter by way of example, it being clear, however, that the box according to the invention can be used for other purposes.

### STATE OF THE PRIOR ART

Commercial vehicles increasingly tend to be electrified in order to reduce fossil fuel consumption and be environmentally sustainable.

It is therefore known that vehicle batteries can be connected to charging stations when the vehicles are stationary. This connection is made via an electric cable normally housed in the vehicle.

However, since there is no specific housing for such a cable, it is clear that the user can lose this cable or arrange it incorrectly, easily causing its wear or damage, typically because it can be crushed by the vehicle itself or by other vehicles in transit in the charging area or in the area where transported goods are loaded/unloaded.

Therefore, there is a need to provide vehicle systems which prevent the loss or incorrect positioning of an electric charging cable.

Examples of generic container spaces in vehicles are disclosed in publications DE102017124830 A1, JP2012096726 A, US2020047841 A1, DE102011006630 A1, WO2010146411 A1, US5816650 A, JP3070811 B2 or JP2016030122 A.

The object of the present invention is to meet the above requirements.

### SUMMARY OF THE INVENTION

Said object is achieved by means of a vehicle as claimed in the appended claims.

### BRIEF DESCRIPTION OF THE DRAWINGS

For a better understanding of the present invention, a preferred embodiment is described below by way of non-limiting example and with reference to the accompanying drawings, wherein:
- Figure 1 is a schematic side view of a vehicle provided with a box and a seat system according to the invention;
- Figure 2 is a top view of the vehicle in Figure 1;
- Figure 3 is a perspective view of a box according to the invention; and
- Figure 4 is an exploded plan view of the box in Figure 3.

### DETAILED DESCRIPTION OF THE INVENTION

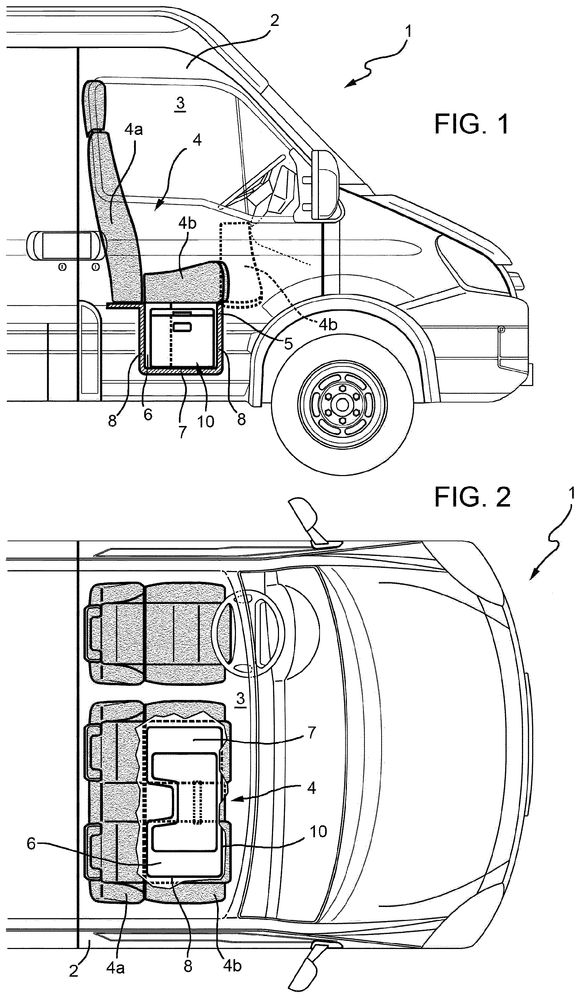

Figures 1 and 2 show a vehicle 1, for example a commercial vehicle, equipped with a plurality of walls 2 defining a housing 3 such as a passenger cab.

The housing 3 is provided with at least one seat assembly 4, in the case described herein a single-seater driver seat assembly and a double-seater passenger seat assembly.

The seat assembly 4 essentially comprises a backrest 4a and a seat 4b. In particular, the backrest 4a can be fixed to a wall of the vehicle 1 whereas the seat 4b is advantageously movable, as described below.

In particular, the seat assembly 4 is placed above a compartment 6 formed between a bottom wall 7 and a side wall 8 extending vertically from at least part of the edge of the bottom wall 7 towards the seat assembly 4, supporting the seat 4b of the latter.

As can be seen in Figure 2, the compartment 6 is preferably U-shaped, where the open part of the "U" faces the opposite side of the driving direction and is axially delimited by the bottom wall 7 and by the seat 4b and laterally entirely delimited by the side wall 8.

As mentioned above, the seat 4b is carried in a movable manner by the side wall 8, advantageously by means of a hinge connection 5 which allows the seat 4b to assume a first, closed position, allowing the passenger to sit and closes the compartment 6 with respect to the housing 3, and a second, open position, allowing access to the compartment 6 from the housing 3.

Preferably, as shown, the hinge connection 5 is formed on a front portion of the wall 7 so that the seat 4b passes from the first to the second position by opening towards the direction of travel of the vehicle.

Advantageously, the vehicle 1 is provided with a box 10 shaped to fit inside the compartment 6 and occupy at least part of the space delimited between the walls 7 and 8.

Preferably, the box 10 is also U-shaped to fit inside the compartment 6, if shaped as described above, or otherwise, to leave a space between it and part of the side wall 8.

The box 10 essentially comprises a bottom wall 11, preferably U-shaped, and a side wall 12 extending vertically from an edge of the bottom wall 11, on the opposite side thereof. Preferably, the side wall 12 extends along the entire edge of the bottom wall 11.

The bottom wall 11 and the side wall 12 delimit a space 13 which is axially delimited at the bottom by the bottom wall 11 and open at the top, and laterally delimited by the side wall 12. The space 13 is sized so as to contain, entirely inside it, an electric cable C for charging vehicle batteries (not shown).

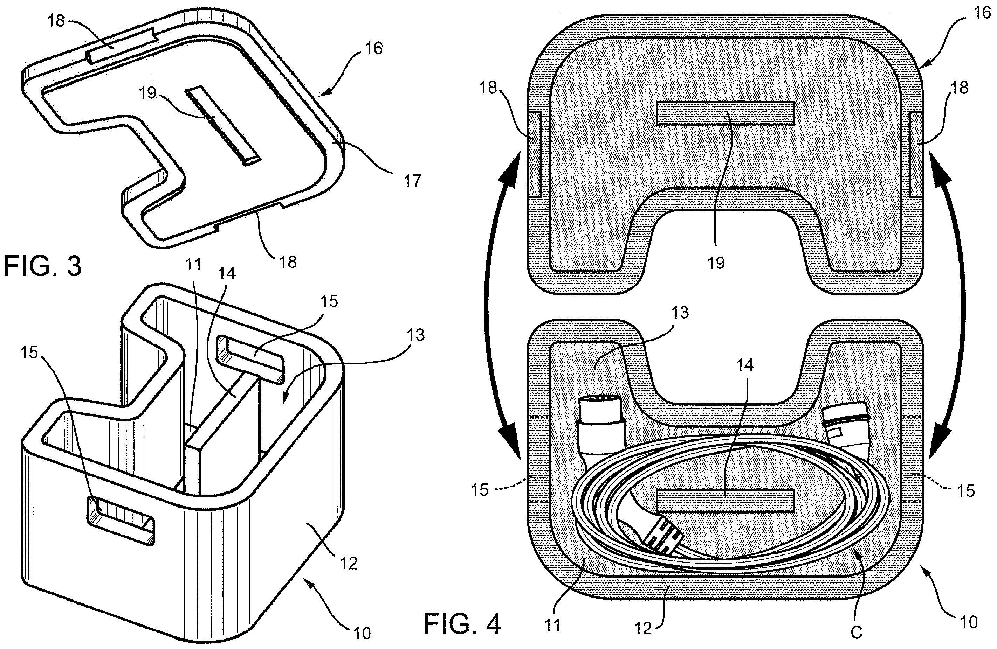

For clarity of reference in the following description, with reference to Figures 3 and 4, the side wall 12 defines a pair of longitudinal portions and a front portion, all of them substantially rectilinear and connected to each other at the corners, and a rear portion defining the "U" shape and provided with two lateral leg portions and a central portion recessed with respect to the lateral leg portions. The central portion and the lateral leg portions are joined together just like the rear portion is joined to the lateral portions.

Advantageously, the box 10 is provided with an internal projection 14 extending from the bottom wall 11 vertically on the opposite side thereof until it reaches, at most, the height extension of the side wall 12.

In the embodiment described herein, the internal projection 14 is a wall with a substantially rectangular section having an extension, along a transverse axis perpendicular to the longitudinal axis of the vehicle, substantially equal to the central portion of the rear portion of the side wall 12.

Preferably, the box 10 can be provided with a pair of gripping portions configured to facilitate the user's grip to extract it or insert it into the compartment 6. Advantageously, these gripping portions are formed by openings/slots 15 made in the longitudinal portions of the side wall 12. Preferably, these openings have a rectangular cross-section.

Optionally, the box 10 may be provided with a lid 16 configured to selectively close the space 13 at the top.

The lid 16 is shaped so as to correspond to the shape of the side wall 12 of the box 10 and can advantageously comprise a side edge 17 extending outwards with respect to the dimension of the side wall 12 so as to enclose it and keep the lid 16 still on the box 10, when in use. The lid can be fastened to the container by means of a suitable flexible metal and plastic cord.

Similar to what has been described for the box 10, the side edge 17 defines a pair of longitudinal portions and a front portion, all of them substantially rectilinear and connected to each other at the corners, and a rear portion defining the "U" shape and provided with two lateral leg portions and a central portion recessed with respect to the lateral leg portions. The central portion and the lateral leg portions are joined together just like the rear portion is joined to the lateral portions.

Advantageously, the lid 16 can be provided with notches 18 formed on the longitudinal portions of the edge 17 at the gripping portions of the box 10 to facilitate the gripping thereof.

Furthermore, the lid 16 can be provided with a recess positioned so as to contain at least part of the projection 14, if its height is equal to that of the side wall 12, in order to further keep the lid 16 still on the box 10, when in use.

Advantageously, the box 10 is made in one piece, preferably of a polymeric material such as propylene. If present, the lid 16 is also advantageously made in one piece, preferably of a polymeric material such as propylene.

The operation of the embodiment of the box 10 described above is as follows.

When the user needs to use the cable C, he/she can open the seat 4b and access the compartment 6 and from there open, if the lid 16 is present, the box 10 and take the cable located in the space 13.

After its use, the user can arrange the cable C neatly by coiling it around the projection 14 and arranging the tails of the coiled cable in the U-shaped bends of the box 10.

The advantages of a vehicle according to the invention are clear from the foregoing.

The box of the present invention allows the electric cable to be placed in a dedicated space in a safe way, thanks to the presence of the projection and to the shape of the box.

Moreover, for the user it is easier to remember to put the electric cable back in its place, since the box is located under the seat base, which can be opened and cannot be used until it is closed.

Moreover, the one-piece polymeric material construction makes its production low cost by moulding. Furthermore, the use of polyurethane makes it possible to obtain an extremely light but structurally reliable box.

Lastly, it is clear that modifications and variations may be made to the vehicle according to the present invention, without however departing from the scope of protection defined by the claims.

For example, it is clear that the shape of the vehicle illustrated, of the seat assembly and of the box may vary depending on the type of vehicle.

Furthermore, it is clear that the number of seats and boxes therein may vary. Similarly, as described, the presence of the lid and gripping portions is optional.

## Claims

1. A vehicle (1) comprising a plurality of walls (2) defining a housing (3) provided with at least one seat assembly (4), said seat assembly (4) being placed above a compartment (6) defined by a bottom wall (7) and a side wall (8) extending on opposite sides along an edge of said bottom wall (7), said side wall (8) supporting said seat assembly (4), said vehicle (1) comprising at least one box (10) housed in said compartment (6),
said box (10) comprising a bottom wall (11) and a side wall (12) extending from at least part of an edge of said bottom wall (11 ), on opposite sides thereof,
said bottom wall (11) and said side wall (12) delimiting a space (13) configured to house a vehicle cable (C),
wherein said seat assembly (4) comprises a backrest (4a) and a seat (4b), said seat (4b) being carried by said side wall (8) so as to assume a first, closed position in which it allows the passenger to sit and separates said compartment (6) from said housing (3), and a second, open position in which it allows access to said compartment (6) and said box (10) from said housing (3),
**characterized in that** said box (10) is a separate element from said housing (3) and can be selectively extracted from said compartment (6) and **in that** said box (10) further comprises a projection (14) extending from said bottom wall (11) on the same side as said side wall (12), said space (13) and said projection (14) being sized to allow the housing of said vehicle cable in said space (13) around said projection (14),

2. - The vehicle according to claim 1, wherein said bottom wall (11) has a "U" section.

3. - The vehicle according to claim 1 or 2, wherein said side wall (12) extends along the entire edge of said bottom wall (11).

4. - The vehicle according to claim 2, wherein said projection (14) has a rectangular section and extends transversely equal to the transversal dimension of a central portion of said "U" section.

5. - The vehicle according to one of the preceding claims, further comprising gripping portions made in said side wall (12), said gripping portions being configured to facilitate the gripping of said box (10).

6. - The vehicle according to claim 5, wherein said gripping portions comprise openings (15) made in said side wall (12).

7. - The vehicle according to one of the preceding claims, wherein said box (10) comprises a lid (16) configured to selectively close said space (13).

8. - The vehicle according to one of the preceding claims, wherein said box (10) is made in one piece.

9. - The vehicle according to one of the preceding claims, wherein said box (10) is made of a polymeric material.

10. - The vehicle according to one of the preceding claims, wherein said box (10) is made of polypropylene.

11. The vehicle according to one of the preceding claims, wherein said seat (4b) is hinged on a front portion of said side wall (8).

## Patentansprüche

1. Ein Fahrzeug (1), umfassend eine Vielzahl von Wänden (2), die ein Gehäuse (3) definieren, das mit mindestens einer Sitzanordnung (4) versehen ist, wobei die Sitzanordnung (4) oberhalb eines durch eine Bodenwand (7) und eine Seitenwand (8) definierten Fachs (6) angeordnet ist, wobei sich die Seitenwand (8) auf gegenüberliegenden Seiten entlang einer Kante der Bodenwand (7) erstreckt, wobei die Seitenwand (8) die Sitzanordnung (4) trägt, wobei das Fahrzeug (1) mindestens eine Box (10) umfasst, die in dem Fach (6) angeordnet ist,
wobei die Box (10) eine Bodenwand (11) und eine Seitenwand (12) umfasst, die sich von mindestens einem Teil einer Kante der Bodenwand (11) auf gegenüberliegenden Seiten davon erstreckt,
wobei die Bodenwand (11) und die Seitenwand (12) einen Raum (13) begrenzen, der dazu eingerichtet ist, ein Fahrzeugkabel (C) aufzunehmen,
wobei die Sitzanordnung (4) eine Rückenlehne (4a) und eine Sitzfläche (4b) umfasst, wobei die Sitzfläche (4b) von der Seitenwand (8) getragen wird, sodass sie eine erste, geschlossene Position einnimmt, in der sie dem Passagier das Sitzen ermöglicht und das Fach (6) vom Gehäuse (3) trennt, und eine zweite, geöffnete Position, in der sie den Zugang zu dem Fach (6) und der Box (10) aus dem Gehäuse (3) ermöglicht,
**dadurch gekennzeichnet, dass** die Box (10) ein separates Element vom Gehäuse (3) ist und selektiv aus dem Fach (6) herausgenommen werden kann und dass die Box (10) ferner einen Vorsprung (14) umfasst, der sich von der Bodenwand (11) auf derselben Seite wie die Seitenwand (12) erstreckt, wobei der Raum (13) und der Vorsprung (14) so dimensioniert sind, dass das Fahrzeugkabel im Raum (13) um den Vorsprung (14) herum untergebracht werden kann.

2. Das Fahrzeug gemäß Anspruch 1, wobei die Bodenwand (11) einen "U"-Querschnitt aufweist.

3. Das Fahrzeug gemäß Anspruch 1 oder 2, wobei sich die Seitenwand (12) entlang der gesamten Kante der Bodenwand (11) erstreckt.

4. Das Fahrzeug gemäß Anspruch 2, wobei der Vorsprung (14) einen rechteckigen Querschnitt aufweist und sich quer entsprechend der Querdimension eines Mittelabschnitts des "U"-Querschnitts erstreckt.

5. Das Fahrzeug gemäß einem der vorhergehenden Ansprüche, ferner umfassend Greifabschnitte, die in der Seitenwand (12) ausgebildet sind, wobei die Greifabschnitte dazu eingerichtet sind, das Greifen der Box (10) zu erleichtern.

6. Das Fahrzeug gemäß Anspruch 5, wobei die Greifabschnitte Öffnungen (15) umfassen, die in der Seitenwand (12) ausgebildet sind.

7. Das Fahrzeug gemäß einem der vorhergehenden Ansprüche, wobei die Box (10) einen Deckel (16) umfasst, der dazu eingerichtet ist, den Raum (13) selektiv zu verschließen.

8. Das Fahrzeug gemäß einem der vorhergehenden Ansprüche, wobei die Box (10) einteilig ausgebildet ist.

9. Das Fahrzeug gemäß einem der vorhergehenden Ansprüche, wobei die Box (10) aus einem polymeren Material hergestellt ist.

10. Das Fahrzeug gemäß einem der vorhergehenden Ansprüche, wobei die Box (10) aus Polypropylen hergestellt ist.

11. Das Fahrzeug gemäß einem der vorhergehenden Ansprüche, wobei die Sitzfläche (4b) an einem vorderen Abschnitt der Seitenwand (8) angelenkt ist.

## Revendications

1. Véhicule (1) comprenant une pluralité de parois (2) définissant un logement (3) doté d'au moins un ensemble siège (4), ledit ensemble siège (4) étant placé au-dessus d'un compartiment (6) défini par une paroi de fond (7) et une paroi latérale (8) **s'étendant** sur des côtés opposés le long d'un bord de ladite paroi de fond (7), ladite paroi latérale (8) supportant ledit ensemble siège (4), ledit véhicule (1) comprenant au moins un caisson (10) logé dans ledit compartiment (6),
ledit caisson (10) comprenant une paroi de fond (11) et une paroi latérale (12) s'étendant depuis au moins une partie d'un bord de ladite paroi de fond (11), sur des côtés opposés de celle-ci, ladite paroi de fond (11) et ladite paroi latérale (12) délimitant un espace (13) configuré pour loger un câble de véhicule (C),
dans lequel ledit ensemble siège (4) comprend un dossier (4a) et un siège (4b), ledit siège (4b) étant porté par ladite paroi latérale (8) de manière à adopter une première position, fermée, dans laquelle il permet au passager de s'asseoir et sépare ledit compartiment (6) dudit logement (3), et une deuxième position, ouverte, dans laquelle il permet l'accès audit compartiment (6) et audit caisson (10) dudit logement (3),
**caractérisé en ce que** ledit caisson (10) est un élément distinct dudit caisson (3) et peut être sélectivement extrait dudit compartiment (6) et **en ce que** ledit caisson (10) comprend en outre une saillie (14) s'étendant de ladite paroi de fond (11) du même côté que ladite paroi latérale (12), ledit espace (13) et ladite saillie (14) étant dimensionnés pour permettre le logement dudit câble de véhicule dans ledit espace (13) autour de ladite saillie (14),

2. Véhicule selon la revendication 1, dans lequel ladite paroi de fond (11) présente un tronçon en « U ».

3. Véhicule selon la revendication 1 ou 2, dans lequel ladite paroi latérale (12) s'étend suivant le bord entier de ladite paroi de fond (11).

4. Véhicule selon la revendication 2, dans lequel ladite saillie (14) présente un tronçon rectangulaire et s'étend transversalement égale à la dimension transversale d'une partie centrale dudit tronçon en « U ».

5. Véhicule selon l'une des revendications précédentes, comprenant en outre des parties de préhension réalisées dans ladite paroi latérale (12), lesdites parties de préhension étant configurées pour faciliter la préhension dudit caisson (10).

6. Véhicule selon la revendication 5, dans lequel lesdites parties de préhension comprennent des ouvertures (15) réalisées dans ladite paroi latérale (12).

7. Véhicule selon l'une des revendications précédentes, dans lequel ledit caisson (10) comprend un couvercle (16) configuré pour fermer sélectivement ledit espace (13).

8. Véhicule selon l'une des revendications précédentes, dans lequel ledit caisson (10) est réalisé d'un seul tenant.

9. Véhicule selon l'une des revendications précédentes, dans lequel ledit caisson (10) est constitué d'un matériau polymérique.

10. Véhicule selon l'une des revendications précédentes, dans lequel ledit caisson (10) est constitué de polypropylène.

11. Véhicule selon l'une des revendications précédentes, dans lequel ledit siège (4b) est articulé sur une partie avant de ladite paroi latérale (8).
